# EUROPEAN PATENT SPECIFICATION

(11) **EP 3 179 764 B1**
(45) Date of publication and mention of the grant of the patent: **07.08.2024**
(21) Application number: 15830566.4
(22) Date of filing: 07.08.2015
(51) Int. Cl.: H04J 11/00, H04L 5/00, H04W 72/23

(54) **NETWORK-ASSISTED INTERFERENCE CANCELLATION AND SUPPRESSION (NAICS)**
NETZWERKUNTERSTÜTZTE INTERFERENZUNTERDRÜCKUNG (NAICS)
ANNULATION ET SUPPRESSION D'INTERFÉRENCE ASSISTÉES PAR RÉSEAU (NAICS)

(30) Priority: 07.08.2014 JP 2014160974
(43) Date of publication of application: 14.06.2017
(73) Proprietor: Sharp Kabushiki Kaisha, Sakai City, Osaka 590-8522 (JP)
(72) Inventor: YAMADA Ryota, Sakai City, Osaka 590-8522 (JP); SHIMEZAWA Kazuyuki, Sakai City, Osaka 590-8522 (JP)
(74) Representative: Müller Hoffmann & Partner
(86) International application number: PCT/JP2015/072478
(87) International publication number: WO 2016/021713

(56) References cited:
- JP-A- 2013 538 499
- 3GPP RAN WG1 CHAIRMAN SATOSHI NAGATA: "3GPP TSG RAN #64; RP-140561; Status Report for RAN WG1 to TSG-RAN #64", vol. TSG RAN, no. Sophia Antipolis, France; 20140610 - 20140613, 9 June 2014 (2014-06-09), XP050783114, Retrieved from the Internet <URL:http://www.3gpp.org/ftp/Meetings_3GPP_SYNC/RAN/Docs/> [retrieved on 20140609]
- ERICSSON: "3GPP TSG RAN WG1 #77; R1-142322; NAICS functionality, robustness, and configurability", vol. RAN WG1, no. Seoul, Korea; 20140519 - 20140523, 10 May 2014 (2014-05-10), XP050814772, Retrieved from the Internet <URL:http://www.3gpp.org/ftp/tsg_ran/WG1_RL1/TSGR1_77/Docs/> [retrieved on 20140510]
- NTT DOCOMO: "3GPP TSG RAN WG1 #76bis; R1-141474; Views on Higher Layer Signaling for NAICS", vol. RAN WG1, no. Shenzhen, China; 20140331 - 20140404, 22 March 2014 (2014-03-22), XP050813901, Retrieved from the Internet <URL:http://www.3gpp.org/ftp/tsg_ran/WG1_RL1/TSGR1_76b/Docs/> [retrieved on 20140322]
- 3GPP TR 36.866 (2014-03): "3GPP TR 36.866 (2014-03); 3rd Generation Partnership Project; Technical Specification Group Radio Access Network; Study on Network-Assisted Interference Cancellation and Suppression (NAIC) for LTE (Release 12)", 3GPP STANDARD ; TECHNICAL REPORT ; 3GPP TR 36.866, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.1, 28 March 2014 (2014-03-28), pages 1 - 64, XP051293311
- "Status Report to TSG", 3GPP TSG RAN MEETING #64 RP-140697, 3 June 2014 (2014-06-03), pages 1 - 12, XP050781694
- NTT DOCOMO: "Views on Higher Layer Signaling for NAICS", 3GPP TSG RAN WG1 MEETING #76BIS R1- 141474, 22 March 2014 (2014-03-22), pages 1 - 3, XP050813901
- ERICSSON: "NAICS functionality, robustness, and onfigurability", 3GPP TSG-RAN WG1#77 RL-142322, 10 May 2014 (2014-05-10), pages 1 - 5
- ALCATEL -LUCENT ET AL.: "Considerations on higher-layer signalling for NAICS", 3GPP TSG RAN WG1 MEETING #77 RL-142063, 10 May 2014 (2014-05-10), pages 1 - 5, XP050814572

## Description

### Technical Field

The present invention relates to network-assisted interference cancellation and suppression (NAICS).

### Background Art

In communication systems such as Long Term Evolution (LTE) and LTE Advanced (LTE-A) by the Third Generation Partnership Project (3GPP) or Worldwide Interoperability for Microwave Access (WiMAX), the communication area may be expanded by taking a cellular construction in which multiple areas covered by a base station device (base station, transmitting station, transmission point, downlink transmission device, uplink reception device, transmit antenna group, transmit antenna port group, component carrier, eNodeB) or a transmitting station conforming to a base station device are arranged in cells. In such a cellular configuration, by utilizing the same frequency between neighbor cells or sectors, the spectral efficiency may be improved.

However, with such a cellular configuration, there is a problem in that a terminal device (mobile station device, receiving station, reception point, uplink transmission device, downlink reception device, mobile terminal, receive antenna group, receive antenna port group, user equipment (UE)) in a cell edge region or a sector edge region receives interference due to the transmitted signals of the base station device constituting another cell or another sector (inter-cell interference, inter-sector interference), and the spectral efficiency becomes lowered.

As a countermeasure against inter-cell interference and inter-sector interference, there is an advanced receiver with advanced reception performance in the terminal device. For example, NPL 1 discloses advanced receivers such as a minimum mean square error - interference rejection combining (MMSE-IRC) receiver, an interference cancellation receiver, an interference suppression receiver, and a maximal likelihood detection (MLD) receiver. Consequently, limitations due to inter-cell interference or the like may be mitigated, thereby making it possible to improve spectral efficiency. Information on Network Assisted Interference Cancellation and Suppression (NAICS) can be gathered from NPL 2, NPL 3 and NPL 4, for example.

In the above communication system, spatial multiplexing transmission (multi-input multi-output (MIMO)) is applied to achieve efficient data transmission. By using the above advanced receiver to suppress inter-stream interference (inter-layer interference, inter-antenna interference) produced in spatial multiplexing transmission, it is possible to improve spectral efficiency.

### Citation List

### Non Patent Literature

NPL 1: "Study on Network Assisted Interference Cancellation and Suppression for LTE," 3GPP TSG RAN Meeting #59, RP-130404, March 2013.
NPL 2: 3GPP RAN WG1 CHAIRMAN SATOSHI NAGATA: "3GPP TSG RAN #64; RP-140561; Status Report for RAN WG1 to TSG-RAN #64", 3GPP DRAFT; RP-140561 RAN1 SR RAN #64, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. TSG RAN, no. Sophia Antipolis, France; 20140610 - 20140613 9 June 2014 (2014-06-09), XP050783114.
NPL 3: ERICSSON: "3GPP TSG RAN WG1 #77; R1-142322; NAICS functionality, robustness, and configurability", 3GPP DRAFT; R1-142322, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Seoul, Korea; 20140519 - 20140523 10 May 2014 (2014-05-10), XP050814772.
NPL 4: NTT DOCOMO: "3GPP TSG RAN WG1 #76bis; R1-141474; Views on Higher Layer Signaling for NAICS", 3GPP DRAFT; R1-141474 NAICS SINGNALING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Shenzhen, China; 20140331 - 20140404 22 March 2014 (2014-03-22), XP050813901.

### Summary of Invention

### Technical Problem

To reduce interference, the above advanced receiver needs knowledge or information about the interference signal (for example, parameters for demodulation). However, there is a problem in that having the base station device transmit knowledge or information about the interference signal to the terminal device increases the signaling overhead. Also, if the base station device has little knowledge or information about the interference signal to pass to the terminal device, information about the interference signal must be estimated on the terminal device side, and there is a problem in that the computational load on the terminal device increases.

The present invention has been devised in light of such circumstances, and an object thereof is to provide a base station device, a terminal device, and a method capable of decreasing interference with effective knowledge or information about the interference signal.

### Solution to Problem

Configurations of a base station apparatus, a terminal apparatus, a method performed by a base station apparatus and a method performed by a terminal apparatus according to the present invention to address the issues discussed above are as follows. The invention is defined by the appended claims. The following present disclosure may include some but not all features as literally defined in the claims and is present for illustration purposes only.

A base station device of the present disclosure comprises: a transmitting unit that transmits NAICS assistance information to a terminal device, wherein the NAICS assistance information includes information related to a physical cell ID, information related to a number of cell-specific reference signal (CRS) antenna ports, information related to an MBSFN subframe, and information related to a transmission mode, the information related to a physical cell ID, the information related to a number of cell-specific reference signal (CRS) antenna ports, the information related to an MBSFN subframe, and the information related to a transmission mode is used to cancel or suppress interference from a neighbor cell, and is set in at least one of a primary cell and a secondary cell, and the primary cell and the secondary cell are used in carrier aggregation.

In a base station device of the present disclosure, the NAICS assistance information additionally includes information related to a power ratio of a downlink shared channel (PDSCH) between OFDM symbols, and information related to a power ratio of a downlink shared channel (PDSCH) with the cell-specific reference signal (CRS), and the information related to a power ratio of a downlink shared channel (PDSCH) between OFDM symbols and the information related to a power ratio of a downlink shared channel (PDSCH) with the cell-specific reference signal (CRS) is used to cancel or suppress interference from a neighbor cell, and is set in at least one of the primary cell and the secondary cell.

A base station device of the present disclosure further comprises: a receiving unit that receives, from the terminal device, information indicating that the terminal device supports NAICS.

In a base station device of the present disclosure, a certain number of the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS) is set.

A base station device of the present disclosure further comprises: a higher layer processing unit that, if the receiving unit receives from the terminal device information indicating that the terminal device supports NAICS, determines whether or not to configure NAICS with respect to the terminal device, wherein if the higher layer processing unit determines to configure NAICS with respect to the terminal device, the transmitting unit transmits the NAICS assistance information to the terminal device.

In a base station device of the present disclosure, from among the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS), at least one piece of information set with respect to the secondary cell is different from the information set with respect to the primary cell.

A method of a base station device of the present disclosure comprises: a step of transmitting NAICS assistance information to a terminal device, wherein the NAICS assistance information includes information related to a physical cell ID, information related to a number of cell-specific reference signal (CRS) antenna ports, information related to an MBSFN subframe, and information related to a transmission mode, the information related to a physical cell ID, the information related to a number of cell-specific reference signal (CRS) antenna ports, the information related to an MBSFN subframe, and the information related to a transmission mode is used to cancel or suppress interference from a neighbor cell, and is set in at least one of a primary cell and a secondary cell, and the primary cell and the secondary cell are used in carrier aggregation.

In a method of a base station device of the present disclosure, the NAICS assistance information additionally includes information related to a power ratio of a downlink shared channel (PDSCH) between OFDM symbols, and information related to a power ratio of a downlink shared channel (PDSCH) with the cell-specific reference signal (CRS), and the information related to a power ratio of a downlink shared channel (PDSCH) between OFDM symbols and the information related to a power ratio of a downlink shared channel (PDSCH) with the cell-specific reference signal (CRS) is used to cancel or suppress interference from a neighbor cell, and is set in at least one of the primary cell and the secondary cell.

A method of a base station device of the present disclosure further comprises: a step of receiving, from the terminal device, information indicating that the terminal device supports NAICS.

In a method of a base station device of the present disclosure, a certain number of the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS) is set.

A method of a base station device of the present disclosure further comprises: if information indicating that the terminal device supports NAICS is received from the terminal device, a step of determining whether or not to configure NAICS with respect to the terminal device; and if determining to configure NAICS with respect to the terminal device, a step of transmitting the NAICS assistance information to the terminal device.

In a method of a base station device of the present disclosure, from among the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS), at least one piece of information set with respect to the secondary cell is different from the information set with respect to the primary cell.

A terminal device of the present disclosure comprises: a receiving unit that receives NAICS assistance information from a base station device, wherein the NAICS assistance information includes information related to a physical cell ID, information related to a number of cell-specific reference signal (CRS) antenna ports, information related to an MBSFN subframe, and information related to a transmission mode, the information related to a physical cell ID, the information related to a number of cell-specific reference signal (CRS) antenna ports, the information related to an MBSFN subframe, and the information related to a transmission mode is used to cancel or suppress interference from a neighbor cell, and is set in at least one of a primary cell and a secondary cell, and the primary cell and the secondary cell are used in carrier aggregation.

In a terminal device of the present disclosure, the NAICS assistance information additionally includes information related to a power ratio of a downlink shared channel (PDSCH) between OFDM symbols, and information related to a power ratio of a downlink shared channel (PDSCH) with the cell-specific reference signal (CRS), and the information related to a power ratio of a downlink shared channel (PDSCH) between OFDM symbols and the information related to a power ratio of a downlink shared channel (PDSCH) with the cell-specific reference signal (CRS) is used to cancel or suppress interference from a neighbor cell, and is set in at least one of the primary cell and the secondary cell.

A terminal device of the present disclosure further comprises: a transmitting unit that transmits, to the base station device, information indicating that the terminal device supports NAICS.

In a terminal device of the present disclosure, a certain number of the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS) is set.

In a terminal device of the present disclosure, from among the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS), at least one piece of information set with respect to the secondary cell is different from the information set with respect to the primary cell.

A method of a terminal device of the present disclosure comprises: a step of receiving NAICS assistance information from a base station device, wherein the NAICS assistance information includes information related to a physical cell ID, information related to a number of cell-specific reference signal (CRS) antenna ports, information related to an MBSFN subframe, and information related to a transmission mode, the information related to a physical cell ID, the information related to a number of cell-specific reference signal (CRS) antenna ports, the information related to an MBSFN subframe, and the information related to a transmission mode is used to cancel or suppress interference from a neighbor cell, and is set in at least one of a primary cell and a secondary cell, and the primary cell and the secondary cell are used in carrier aggregation.

In a method of a terminal device of the present disclosure, the NAICS assistance information additionally includes information related to a power ratio of a downlink shared channel (PDSCH) between OFDM symbols, and information related to a power ratio of a downlink shared channel (PDSCH) with the cell-specific reference signal (CRS), and the information related to a power ratio of a downlink shared channel (PDSCH) between OFDM symbols and the information related to a power ratio of a downlink shared channel (PDSCH) with the cell-specific reference signal (CRS) is used to cancel or suppress interference from a neighbor cell, and is set in at least one of the primary cell and the secondary cell.

A method of a terminal device of the present disclosure further comprises: a step of transmitting, to the base station device, information indicating that the terminal device supports NAICS.

In a method of a terminal device of the present disclosure, a certain number of the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS) is set.

In a method of a terminal device of the present disclosure, from among the information related to a physical cell ID, the information related to a number of cell-specific reference signal (CRS) antenna ports, the information related to an MBSFN subframe, the information related to a transmission mode, the information related to a power ratio of a downlink shared channel (PDSCH) between OFDM symbols and the information related to a power ratio of a downlink shared channel (PDSCH) with the cell-specific reference signal (CRS), at least one piece of information set with respect to the secondary cell is different from the information set with respect to the primary cell.

### Advantageous Effects of Invention

According to the present invention, in a wireless environment in which an interference signal arrives, it becomes possible to decrease interference effectively.

### Brief Description of Drawings

[FIG. 1] FIG. 1 is a diagram illustrating an example of a communication system according to the present embodiment.
[FIG. 2] FIG. 2 is a block diagram illustrating an exemplary configuration of a base station device according to the present embodiment.
[FIG. 3] FIG. 3 is a block diagram illustrating an exemplary configuration of a terminal device according to the present embodiment.

### Description of Embodiments

A communication system according to the present embodiment is equipped with a base station device (transmitting device, cell, transmission point, transmit antenna group, transmit antenna port group, component carrier, eNodeB) and a terminal device (terminal, mobile terminal reception point, receiving terminal, receiving device, receive antenna group, receive antenna port group, UE).

In the present embodiment, "X/Y" includes the meaning of "X or Y". In the present embodiment, "X/Y" includes the meaning of "X and Y". In the present embodiment, "X/Y" includes the meaning of "X and/or Y".

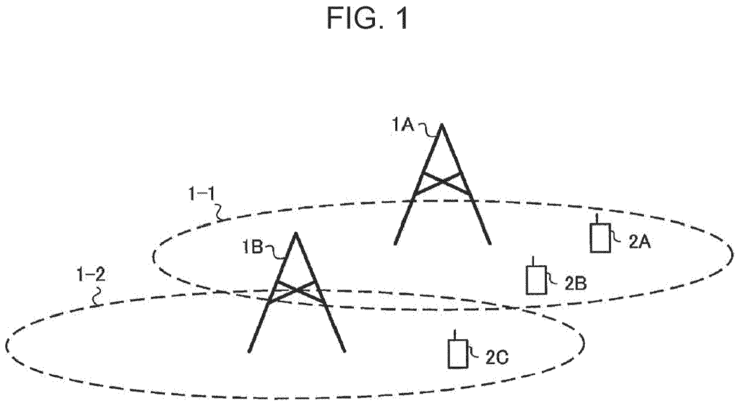

FIG. 1 is a diagram illustrating an example of a communication system according to the present embodiment. As illustrated in FIG. 1, the communication system according to the present embodiment is equipped with base station devices 1A and 1B, and terminal devices 2A, 2B, and 2C. Also, the coverage 1-1 is the range (communication area) over which the base station device 1A is able to connect with a terminal device. Also, the coverage 1-2 is the range (communication area) over which the base station device 1B is able to connect with a terminal device. Hereinafter, the terminal devices 2A and 2B will also be designated the terminal device 2.

In FIG. 1, if the base station device 1A spatially multiplexes the terminal device 2A and the terminal device 2B, or if the terminal device 2 receives an inter-cell interference signal from the base station device 1B, the received signal at the terminal device 2 includes a desired signal addressed to the local terminal device itself (also designated the first terminal device) and a signal addressed to a terminal device (also designated the second terminal device) that acts as interference. Specifically, the received signal at the terminal device 2A includes a desired signal addressed to the local terminal device itself transmitted from the base station device 1A, as well as interference signals, namely, a signal addressed to the terminal device 2B transmitted from the base station device 1A and a signal addressed to the terminal device 2C transmitted from the base station device 1B. Also, the received signal at the terminal device 2B includes a desired signal addressed to the local terminal device itself transmitted from the base station device 1A, as well as interference signals, namely, a signal addressed to the terminal device 2A transmitted from the base station device 1A and a signal addressed to the terminal device 2C transmitted from the base station device 1B.

In this way, the present embodiment is not limited to the communication system of FIG. 1, and it is sufficient for the base station device to perform spatial multiplexing of multiple terminal devices, thereby causing the terminal devices to receive inter-user interference, or inter-cell interference from another base station device. Also, it is not necessary to receive inter-user interference and inter-cell interference at the same time, and the case of receiving only inter-user interference as well as the case of receiving only inter-cell interference are also both included in the present invention.

In FIG. 1, in uplink wireless communication from the terminal device 2 to the base station device 1A, the following uplink physical channels are used. Uplink physical channels are used to transmit information output from a higher layer.
- Physical uplink control channel (PUCCH)
- Physical uplink shared channel (PUSCH)
- Physical random access channel (PRACH)

The PUCCH is used to transmit uplink control information (UCI). Herein, the uplink control information includes a positive acknowledgement (ACK) or a negative acknowledgement (NACK) (ACK/NACK) in response to downlink data (downlink transport block, downlink shared channel (DL-SCH)). An ACK/NACK in response to downlink data is also called a HARQ-ACK or HARQ feedback.

Also, the uplink control information includes channel state information (CSI) about the downlink. Also, the uplink control information includes a scheduling request (SR) used to request the resources of an uplink shared channel (UL-SCH). The channel state information corresponds to a rank indicator RI that specifies a favorable number of spatial multiplexing, a precoding matrix indicator PMI that specifies a favorable precoder, and a channel quality indicator CQI that specifies a favorable transmission rate.

The channel quality indicator CQI (hereinafter, CQI value) may be treated as a favorable modulation scheme (such as QPSK, 16-QAM, 64-QAM, or 256-QAM, for example) and a code rate in a certain band (discussed in detail later). The CQI value may be treated as an index (CQI index) determined by the modification scheme and the code rate. The CQI value may be treated as being predetermined by the relevant system.

Note that the rank indicator and the precoding quality indicator may be treated as being predetermined by the system. The rank indicator and the precoding matrix indicator may be treated as indices determined by the number of spatial multiplexing and the precoding matrix information. Note that the values of the rank indicator, the precoding matrix indicator, and the channel quality indicator CQI are collectively termed the CSI values.

The PUSCH is used to transmit uplink data (uplink transport block, UL-SCH). Additionally, the PUSCH may also be used to transmit an ACK/NACK and/or channel state information together with uplink data. Additionally, the PUSCH may also be used to transmit only uplink control information.

In addition, the PUSCH is used to transmit an RRC message. An RRC message is information/a signal processed in the radio resource control (RRC) layer. Also, the PUSCH is used to transmit a MAC control element (CE). Herein, a MAC CE is information/a signal processed (transmitted) in the medium access control (MAC) layer.

For example, the power headroom may be included in the MAC CE and reported via the PUSCH. In other words, the MAC CE field may be used to indicate the level of power headroom.

The PRACH is used to transmit a random access preamble.

In addition, in uplink wireless communication, an uplink reference signal (UL RS) is used as an uplink physical signal. The uplink physical signal is not used to transmit information output from a higher layer, but is used by the physical layer. Herein, the uplink reference signal includes a demodulation reference signal (DMRS) and a sounding reference signal (SRS).

The DMRS relates to the transmission of the PUSCH or the PUCCH. For example, the base station device 1A uses the DMRS to conduct channel correction of the PUSCH or the PUCCH. The SRS is unrelated to the transmission of the PUSCH or the PUCCH. For example, the base station device 1A uses the SRS to measure the uplink channel state.

In FIG. 1, in downlink wireless communication from the base station device 1A to the terminal device 2, the following downlink physical channels are used. Downlink physical channels are used to transmit information output from a higher layer.
- Physical broadcast channel (PBCH)
- Physical control format indicator channel (PCFICH)
- Physical hybrid automatic repeat request (HARQ) indicator channel (PHICH)
- Physical downlink control channel (PDCCH)
- Enhanced physical downlink control channel (EPDCCH)
- Physical downlink shared channel (PDSCH)

The PBCH is used to broadcast a master information block (MIB, broadcast channel (BCH)) used in common by the terminal devices 2. The PCFICH is used to transmit information indicating the domain (the number of OFDM symbols, for example) used in the transmission of the PDCCH.

The PHICH is used to transmit an ACK/NACK in response to uplink data (transport block, code word) received by the base station device 1A. In other words, the PHICH is used to transmit a HARQ indicator (HARQ feedback) indicating an ACK/NACK in response to uplink data. The ACK/NACK is also called the HARQ-ACK. The terminal device 2 reports the received ACK/NACK to a higher layer. The ACK/NACK is an ACK indicating that data has been received correctly, a NACK indicating that data has not been received correctly, or a DTX indicating that corresponding data has not been found. Also, if the PHICH in response to uplink data does not exist, the terminal device 2 reports an ACK to a higher layer.

The PDCCH and the EPDCCH are used to transmit downlink control information (DCI). Herein, multiple DCI formats are defined for the transmission of downlink control information. In other words, fields for downlink control information are defined in DCI formats and mapped to information bits.

For example, as a DCI format for the downlink, a DCI format 1A used for the scheduling of one PDSCH in one cell (the transmission of one downlink transport block) is defined.

For example, a DCI format for the downlink includes information related to PDSCH resource allocation, information related to a modulation and coding scheme (MCS) for the PDSCH, and downlink control information such as a TPC command for the PUCCH. Herein, a DCI format for the downlink is also called a downlink grant (or downlink assignment).

As another example of a DCI format for the uplink, a DCI format 0 used for the scheduling of one PUSCH in one cell (the transmission of one uplink transport block) is defined.

For example, a DCI format for the uplink includes information related to PUSCH resource allocation, information related to an MCS for the PUSCH, and uplink control information such as a TPC command for the PUSCH. A DCI format for the uplink is also called an uplink grant (or uplink assignment).

In addition, a DCI format for the uplink may be used to request channel state information (CSI; also called reception quality information) for the downlink (CSI request). The channel state information corresponds to the rank indicator RI that specifies a favorable number of spatial multiplexing, the precoding matrix indicator PMI that specifies a favorable precoder, and the channel quality indicator CQI that specifies a favorable transmission rate.

In addition, a DCI format for the uplink may be used for a setting that indicates an uplink resource with which the terminal device maps a channel state information feedback report (CSI feedback report) for the base station device. For example, the CSI feedback report may be used for a setting that indicates an uplink resource by which to report channel state information periodically (periodic CSI). The CSI feedback report may be used for a mode setting that reports channel state information periodically (CSI report mode).

For example, the CSI feedback report may be used for a setting that indicates an uplink resource with which to report channel state information aperiodically (aperiodic CSI). The CSI feedback report may be used for a mode setting that reports channel state information aperiodically (CSI report mode). The base station devices 1A and 1B may set one of either the periodic CSI feedback report or the aperiodic CSI feedback report. Additionally, the base station devices 1A and 1B may also set both the periodic CSI feedback report and the aperiodic CSI feedback report.

In addition, a DCI format for the uplink may be used for a setting that indicates the type of CSI feedback report that the terminal device feeds back to the base station device. The type of CSI feedback report may be wideband CSI (for example, wideband CQI) or subband CSI (for example, subband CQI).

In addition, the DCI format for the uplink may be used for a mode setting that includes the periodic CSI feedback report or the aperiodic CSI feedback report and the type of CSI feedback report. For example, the mode may be a mode that reports the aperiodic CSI feedback report and wideband CSI, a mode that reports the aperiodic CSI feedback report and subband CSI, a mode that reports the aperiodic CSI feedback report and wideband CSI as well as subband CSI, a mode that reports the periodic CSI feedback report and wideband CSI, a mode that reports the periodic CSI feedback report and subband CSI, or a mode that reports the periodic CSI feedback report and wideband CSI as well as subband CSI.

If a PDSCH resource is scheduled using a downlink assignment, the terminal device 2 receives downlink data by the scheduled PDSCH. Also, if a PUSCH resource is scheduled using an uplink grant, the terminal device 2 transmits uplink data and/or uplink control information by the scheduled PUSCH.

The PDSCH is used to transmit downlink data (downlink transport block, DL-SCH). In addition, the PDSCH is used to transmit a system information block type 1 message. The system information block type 1 message is cell-specific information.

In addition, the PDSCH is used to transmit a system information message. A system information message includes a system information block X other than system information block type 1. The system information message is cell-specific information.

In addition, the PDSCH is used to transmit an RRC message. Herein, an RRC message transmitted from the base station device 1A may be shared in common among multiple terminal devices 2 inside the cell. Also, an RRC message transmitted from the base station device 1A may be a message dedicated to one terminal device 2 (also called dedicated signaling). In other words, user device-specific information is transmitted using a message dedicated to one terminal device 2. Also, the PDSCH is used to transmit the MAC CE.

Herein, the RRC message and/or the MAC CE are also called higher layer signaling.

Also, the PDSCH may be used to request downlink channel state information. Also, the PDSCH may be used to transmit an uplink resource with which the terminal device maps a channel state information feedback report (CSI feedback report) for the base station device. For example, the CSI feedback report may be used for a setting that indicates an uplink resource with which to report channel state information periodically (periodic CSI). The CSI feedback report may be used for a mode setting that reports channel state information periodically (CSI report mode).

The type of downlink CSI feedback report may be wideband CSI (for example, wideband CSI) or subband CSI (for example, subband CSI). Wideband CSI computes one piece of channel state information for the system band of the cell. Subband CSI subdivides the system band into certain units, computes one piece of channel state information for a subdivision.

Also, in downlink wireless communication, a synchronization signal (SS) and a downlink reference signal (DL RS) are used as a downlink physical signal. The downlink physical signal is not used to transmit information output from a higher layer, but is used by the physical layer.

The synchronization signal is used by the terminal device 2 to synchronize the frequency domain and the time domain of the downlink. Also, the downlink reference signal is used by the terminal device 2 to conduct channel correction of the downlink physical channel. For example, the downlink reference signal is used by the terminal device 2 to compute channel state information about the downlink.

Herein, the downlink reference signal includes a cell-specific reference signal (CRS), a UE-specific reference signal (URS) related to the PDSCH, a demodulation reference signal (DMRS) related to the EPDCCH, a non-zero power channel state information reference signal (NZP CSI-RS), and a zero power channel state information reference signal (ZP CSI-RS).

The CRS is transmitted to all bands of a subframe, and is used to demodulate the PBCH/PDCCH/PHICH/PCFICH/PDSCH. The URS related to the PDSCH is transmitted on the subframe and band used to transmit the PDSCH to which the URS relates, and is used to demodulate the PDSCH to which the URS relates.

The DMRS related to the EPDCCH is transmitted on the subframe and band used to transmit the EPDCCH to which the DMRS relates. The DMRS is used to demodulate the EPDCCH to which the DMRS relates.

The NZP CSI-RS resource is set by the base station device 1A. For example, the terminal device 2 conducts signal measurement (channel measurement) using the NZP CSI-RS. The ZP CSI-RS resource is set by the base station device 1A. The base station device 1A transmits the ZP CSI-RS at zero output. For example, the terminal device 2 conducts interference measurement on the resource to which the NZP CSI-RS corresponds.

The ZP CSI-RS resource is set by the base station device 1A. The base station device 1B transmits the ZP CSI-RS at zero output. In other words, the base station device 1A does not transmit the ZP CSI-RS. The base station device 1B does not transmit the PDSCH or the EPDCCH in the resource for which the ZP CSI-RS is set. For example, the terminal device 2C is able to measure interference in the resource corresponding to the NZP CSI-RS in a certain cell.

A multimedia broadcast multicast service single frequency network (MBSFN) RS is transmitted on all bands of the subframe used to transmit the PMCH. The MBSFN RS is used to demodulate the PMCH. The PMCH is transmitted by the antenna port used to transmit the MBSFN RS.

Herein, downlink physical channels and downlink physical signals are also collectively designated downlink signaling. Also, uplink physical channels and uplink physical signals are also collectively designated uplink signaling. Also, downlink physical channels and uplink physical channels are collectively designated physical channels. Also, downlink physical signals and uplink physical signals are collectively designated physical signals.

Additionally, the BCH, UL-SCH, and DL-SCH are transport channels. Channels used in the MAC layer are designated transport channels. In addition, the units of transport channels used in the MAC layer are also called transport blocks (TBs) or MAC protocol data units (PDUs). A transport block is a unit of data that the MAC layer delivers to the physical layer. In the physical layer, transport blocks are mapped to code words, and a coding process or the like is conducted on each code word.

The terminal device may be provided with a function that cancels or suppresses inter-user interference and inter-cell interference. Such technology is being investigated as network-assisted interference cancellation and suppression (NAICS) by the 3rd Generation Partnership Project (3GPP). In NAICS, the base station device transmits NAICS assistance information (also called first assistance information) used by the terminal device for the handling, cancellation, or suppression of an interference signal. The terminal device receives the NAICS assistance information, and on the basis of the NAICS assistance information, detects parameters for the cancellation or suppression of an interference signal, and uses the parameters to cancel or suppress the interference signal. The NAICS assistance information includes some or all of a cell ID, a number of CRS antenna ports, a MBSFN subframe pattern, a PB, a virtual cell ID, a scrambling identity (nSCID), a PA, a transmission mode, quasi co-location (QCL) information, a ZP/NZP CSI-RS configuration, a PDSCH starting position, a TDD UL/DL configuration, a precoding matrix indicator/rank indicator, a modulation scheme, and resource allocation information.

Note that the PA is the power ratio of the PDSCH in OFDM symbols where the CRS is not mapped, and the CRS. The PB expresses the power ratio of the PDSCH in OFDM symbols where the CRS is mapped, and the PDSCH in OFDM symbols where the CRS is not mapped. The QCL information is information related to QCL with respect to a certain antenna port, a certain signal, or a certain channel. For two antenna ports, if the long-term characteristics of the channel carrying symbols on one antenna port may be estimated from the channel carrying symbols on the other antenna port, these antenna ports are said to be quasi co-located (QCL). Long-term characteristics include the delay spread, the Doppler spread, the Doppler shift, the average gain, and/or the average delay. In other words, when two antenna ports are QCL, the terminal device is able to treat these antenna ports as having the same long-term characteristics.

Note that for each of the parameters included in the above NAICS assistance information, a single value (candidate) may be set, or multiple values (candidates) may be set. If multiple values are set, the terminal device interprets the values for that parameter to indicate values that the interfering base station device may possibly set, and detects the parameter set in the interference from the multiple values. Also, the above NAICS assistance information indicates information about another base station device in some cases, or indicates information about the local base station device itself in other cases.

Note that when demodulating the PDSCH with respect to a terminal device, the above NAICS assistance information is used by that terminal device for the handling, cancellation, or suppression of interference from the PDSCH with respect to another terminal device. For this reason, the NAICS assistance information is also designated PDSCH interference assistance information or PDSCH assistance information. The NAICS assistance information at least includes information related to the mapping of a PDSCH resource element for another terminal device. The NAICS assistance information may also be used when conducting various measurements. Such measurements include radio resource management (RRM) measurement, radio link monitoring (RLM) measurement, and channel state information (CSI) measurement.

On the basis of the set NAICS assistance information, the terminal device detects (specifies) PDSCH interference, and decreases the detected PDSCH interference. The NAICS assistance information may be configured to include quasi-static control information with a comparatively long update interval, and not to include dynamic control information with a comparatively short update interval. Quasi-static control information includes information such as the cell ID, a number of CRS antenna ports, the MBSFN subframe pattern, the PB, the virtual cell ID, the scrambling identity (nSCID), the PA, the transmission mode, the quasi co-location (QCL) information, the ZP/NZP CSI-RS configuration, the PDSCH starting position, and the TDD UL/DL configuration. Dynamic control information includes information such as the precoding matrix indicator/rank indicator, the modulation scheme, and the resource allocation information. Also, as described already, multiple values (candidates) may be set for each of the parameters included in the NAICS assistance information. For this reason, the NAICS assistance information may be treated as being information for indicating multiple PDSCH interference candidates. The terminal device is able to conduct blind detection, in which detection is attempted successively on each PDSCH interference candidate that is recognizable on the basis of the NAICS assistance information.

Consequently, the terminal device is able to reduce interference due to the PDSCH with respect to another terminal device on the basis of parameters detected from the NAICS assistance information, and thereby is able to accurately obtain a signal addressed to the terminal device itself. Also, since the NAICS assistance information indicates multiple candidates, the effects exerted on the scheduling of the base station device may be reduced. Note that the terminal device may also be said to be blindly detecting parameters not received as assistance information. Linear detection and non-linear detection may be conducted for the cancellation or suppression of an interference signal. Linear detection is able to perform detection by accounting for the channel of the desired signal addressed to the terminal device itself, and the channel of the interference signal addressed to another terminal device. Such linear detection is also called enhanced linear minimum mean square error - interference rejection combining (ELMMSE-IRC). Also, an interference canceller or maximum likelihood detection may be conducted as non-linear detection.

The base station device is able to list and transmit NAICS assistance information as an NAICS assistance information list. The NAICS assistance information list may include at least one set of NAICS assistance information. Also, the NAICS assistance information list may be transmitted as neighbor cell NAICS information (also called first interference information). Note that the NAICS assistance information list may also be called a PDSCH assistance information list. Also, the neighbor cell NAICS information may also be called neighbor cell PDSCH information.

When the CRS transmitted from another base station device creates interference, the terminal device is able to use CRS assistance information (also called second assistance information) transmitted by a higher-layer signal from the base station device to reduce the interference received from the CRS of the other base station device. The CRS assistance information is information about the other base station device, and includes the cell ID, the number of CRS antenna ports, and the MBSFN subframe settings list.

Additionally, the CRS assistance information is listed and transmitted as a CRS assistance information list. The CRS assistance information list includes at least one set of CRS assistance information. Also, the CRS assistance information list is transmitted as neighbor cell CRS information (also called second interference information).

Note that when demodulating the PDSCH with respect to a terminal device, the above CRS assistance information is used by that terminal device for the handling, cancellation, or suppression of interference from the CRS of another cell (neighbor cell). The CRS assistance information may also be used when conducting various measurements. Such measurements include radio resource management (RRM) measurement, radio link monitoring (RLM) measurement, and channel state information (CSI) measurement.

Note that the NAICS assistance information may be used not only when the terminal device handles PDSCH interference, but also when handling CRS interference or the interference of another channel.

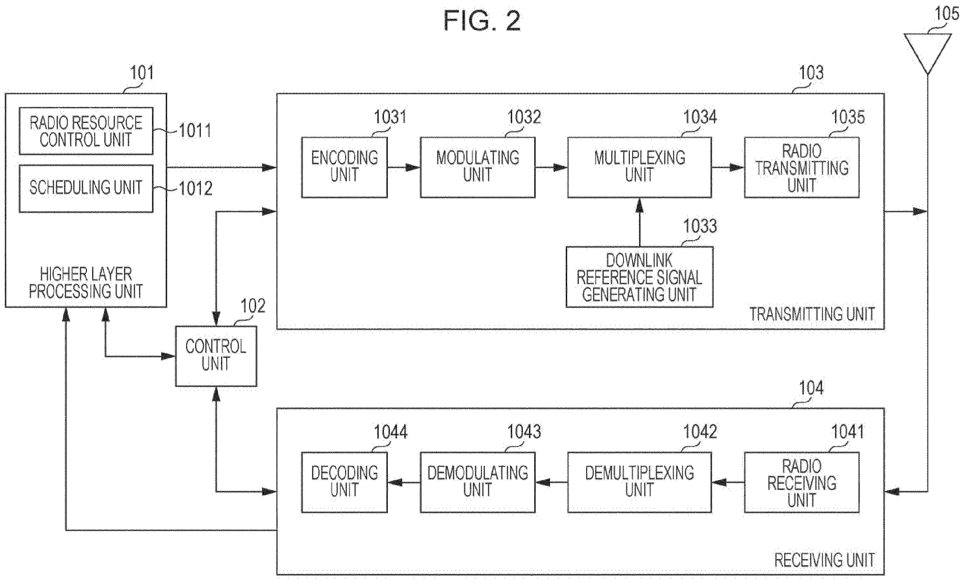

FIG. 2 is a schematic block diagram illustrating a configuration of the base station device 1A according to the present embodiment. As illustrated in FIG. 2, the base station device 1A is configured to include a higher layer processing unit 101, a control unit 102, a transmitting unit 103, a receiving unit 104, and a transmit/receive antenna 105. In addition, the higher layer processing unit 101 is configured to include a radio resource control unit 1011 and a scheduling unit 1012. Also, the transmitting unit 103 is configured to include an encoding unit 1031, a modulating unit 1032, a downlink reference signal generating unit 1033, a multiplexing unit 1034, and a radio transmitting unit 1035. Also, the receiving unit 104 is configured to include a radio receiving unit 1041, a demultiplexing unit 1042, a demodulating unit 1043, and a decoding unit 1044.

The higher layer processing unit 101 conducts processing in the medium access control (MAC) layer, the packet data convergence protocol (PDCP) layer, the radio link control (RLC) layer, and the radio resource control (RRC) layer. In addition, the higher layer processing unit 101 generates required control information for controlling the transmitting unit 103 and the receiving unit 104, and outputs to the control unit 102.

The higher layer processing unit 101 receives, from a terminal device, information related to the terminal device, such as the functions of the terminal device (UE capability). In other words, the terminal device transmits its own functions to the base station device by a higher layer signal.

Note that in the following description, information related to a terminal device includes information indicating whether or not the terminal device supports a certain function, or alternatively, information indicating that the terminal device has completed the adoption and testing of a certain function. Note that in the following description, whether or not a terminal device supports a certain function includes whether or not the terminal device has completed the adoption and testing of the certain function.

For example, if a terminal device supports a certain function, the terminal device transmits information (a parameter) indicating whether or not the terminal device supports the certain function. If a terminal device does not support a certain function, the terminal device does not transmit information (a parameter) indicating whether or not the terminal device supports the certain function. In other words, whether or not a terminal device supports a certain function is reported by whether or not the terminal device transmits information (a parameter) indicating whether or not the terminal device supports the certain function. Note that the information (parameter) indicating whether or not a terminal device supports a certain function may also be reported using one bit with a value of 1 or 0.

The functions of a terminal device may also include a parameter indicating whether or not the terminal device supports NAICS. If there are multiple NAICS functions, the terminal device may transmit, to the base station device, individual parameters indicating whether or not each function is supported. For example, if the two functions of PDSCH interference handling and CRS interference handling are included as NAICS, the terminal device may transmit, to the base station device, a signal indicating whether or not the terminal device supports PDSCH interference handling, and a signal indicating whether or not the terminal device supports CRS interference handling. Specifically, if the terminal device supports CRS interference handling and PDSCH interference handling, the terminal device transmits information (a parameter) indicating whether or not the terminal device supports CRS interference handling and information (a parameter) indicating whether or not the terminal device supports PDSCH interference handling. Alternatively, if the terminal device supports CRS interference handling, but does not support PDSCH interference handling, the terminal device transmits information (a parameter) indicating whether or not the terminal device supports CRS interference handling, but does not transmit information (a parameter) indicating whether or not the terminal device supports PDSCH interference handling.

Additionally, a terminal device that supports PDSCH interference handling may also be configured to always support CRS interference handling. In other words, if a terminal device transmits information (a parameter) indicating whether or not the terminal device supports PDSCH interference handling, the terminal device also transmits information (a parameter) indicating whether or not the terminal device supports CRS interference handling.

Also, for a terminal device in a certain resource, support for CRS interference handling may be mandatory, whereas support for PDSCH interference handling may be optional. Also, for a terminal device in a certain resource, support for CRS interference handling and support for PDSCH interference handling may be mandatory.

Note that the case of the terminal device supporting PDSCH interference handling may also be expressed as the terminal device including a function of handling both PDSCH interference and CRS interference. In other words, when the base station device receives a report from the terminal device indicating that the terminal device supports PDSCH interference handling, the base station device may judge that the terminal device includes a function of CRS interference handling, irrespectively of the presence or absence of support for CRS interference handling. Also, if the terminal device supports PDSCH interference handling, the terminal device may always report to the base station device that the terminal device also supports CRS interference handling.

Note that the function of CRS interference handling may be a first CRS interference handling that transmits to the base station device independently of the NAICS, or a second CRS interference handling that performs CRS interference handling as part of the NAICS function. The terminal device may transmit, to the base station device, both whether or not the terminal device supports the first CRS interference handling and whether or not the terminal device supports the second CRS interference handling.

The higher layer processing unit 101 judges whether or not to set NAICS assistance information, and whether or not to set CRS assistance information. The base station device is able to judge whether or not to set NAICS/CRS assistance information from the above functions of the terminal device.

The radio resource control unit 1011 generates, or acquires from a higher node, information such as downlink data (transport blocks), system information, RRC messages, or the MAC CE to be mapped to the downlink PDSCH. The radio resource control unit 1011 outputs downlink data to the transmitting unit 103, and outputs other information to the control unit 102. In addition, the radio resource control unit 1011 manages various configuration information of the terminal device 2. This configuration information may include configuration information for a terminal device that acts as interference. Alternatively, configuration information for a terminal device that acts as interference may be acquired from the configuration information for the local terminal device itself. Also, configuration information for a base station device that acts as interference may be included.

The base station device is able to transmit NAICS assistance information and/or CRS assistance information to a terminal device with the capability of conducting NAICS and/or CRS interference cancellation.

If the terminal device supports carrier aggregation (CA), the base station device is able to configure NAICS assistance information and/or CRS assistance information with respect to a primary cell (PCell) and a secondary cell (SCell). In the description of the present embodiment, the NAICS assistance information and/or the CRS assistance information is also simply designated assistance information.

In this case, the base station device is able to configure different assistance information for each cell. For example, the base station device may configure one of the CRS assistance information or the NAICS assistance information for the PCell, and configure only the NAICS assistance information for the SCell. As another example, the base station device may configure the CRS assistance information and the NAICS assistance information for the PCell, and configure only the NAICS assistance information for the SCell. In other words, configuring the CRS assistance information for the SCell may be made unavailable.

In addition, CRS assistance information (NAICS assistance information) for the PCell and CRS assistance information (NAICS assistance information) for the SCell may be configured individually. Also, the CRS assistance information (NAICS assistance information) for the PCell and the CRS assistance information (NAICS assistance information) for the SCell may include different information (parameters, settings). For example, the CRS assistance information (NAICS assistance information) for the PCell may be treated as assistance information for the first CRS interference handling, while the CRS assistance information (NAICS assistance information) for the SCell may be treated as assistance information for the second CRS interference handling. Also, the base station device may treat the CRS assistance information (NAICS assistance information) for the PCell and the CRS assistance information (NAICS assistance information) for the SCell as assistance information for the second CRS interference handling (assistance information for the second PDSCH interference handling). In this case, in the CRS assistance information (NAICS assistance information) for the PCell and the CRS assistance information (NAICS assistance information) for the SCell, the base station device may configure (stipulate, define) optional information (parameters, settings) differently. Note that optional information refers to information that is not necessarily required to be configured, or information that the base station device may decide whether or not to configure.

In addition, the base station device may limit the number of cells in which to configure CRS assistance information and/or NAICS assistance information. Since limiting the number of cells in which to configure CRS assistance information and/or NAICS assistance information also limits the parameters of interference to be computed by the terminal device, the computational load on the terminal device may be reduced. The base station device may limit the configuration of CRS assistance information and/or NAICS assistance information to one cell. For example, CRS assistance information and/or NAICS assistance information is set in only one cell of either the PCell or the SCell. The base station device may limit the configuration of CRS assistance information and/or NAICS assistance information for each cell. As another example, the base station device may configure the PCell and one SCell, up to a maximum of two cells.

In addition, the base station device may transmit NAICS assistance information with the physical cell ID, the number of CRS antenna ports, and the MBSFN subframe configuration always included as mandatory information (parameters), while treating other information as optional information. Specifically, the optional information includes some or all of the PB, the virtual cell ID, the scrambling identity (nSCID), the PA, the transmission mode, the quasi co-location (QCL) information, the ZP/NZP CSI-RS configuration, the PDSCH starting position, the TDD UL/DL configuration, the precoding matrix indicator/rank indicator, the modulation scheme, and the resource allocation information.

In a case in which only the physical cell ID, the number of CRS antenna ports, and the MBSFN subframe configuration are included in the NAICS assistance information, or in which no optional information is configured, the terminal device does not anticipate PDSCH interference. In other words, the terminal device anticipates and conducts the handling, cancellation, or suppression of CRS interference only.

In addition, if a function of the terminal device reported from the terminal device is CRS interference handling, the base station device transmits only the physical cell ID, the number of CRS antenna ports, and the MBSFN subframe configuration as NAICS assistance information, or transmits NAICS assistance information without configuring any optional information.

The scheduling unit 1012 decides factors such as the frequencies and subframes to which to allocate physical channels (PDSCH and PUSCH), and the code rate, modulation scheme (or MCS), and transmit power of the physical channels (PDSCH and PUSCH). The scheduling unit 1012 outputs the decided information to the control unit 102.

The scheduling unit 1012 generates information used for scheduling of physical channels (PDSCH and PUSCH) on the basis of a scheduling result. The scheduling unit 1012 outputs the generated information to the control unit 102. In the present embodiment, as an example, the scheduling unit 1012 schedules the terminal device 2A and the terminal device 2B in the same resource. Note that in the present embodiment, the same resource is used for the sake of simplicity, but the terminal device 2A and the terminal device 2B may also be scheduled in different resources. Note that scheduling may also be performed in cooperation with the base station device 1B.

On the basis of information input from the higher layer processing unit 101, the control unit 102 generates control signals that control the transmitting unit 103 and the receiving unit 104. On the basis of information input from the higher layer processing unit 101, the control unit 102 generates and outputs downlink control information to the transmitting unit 103.

The transmission unit 103, following a control signal input from the control unit 102, generates a downlink reference signal, encodes and modulates a HARQ indicator, downlink control information, and downlink data input from the higher layer processing unit 101, multiplexes the PHICH, PDCCH, E-PDCCH, PDSCH, and downlink reference signal, and transmits a signal to the terminal device 2 via the transmit/receive antenna 105.

The encoding unit 1031 encodes a HARQ indicator, downlink control information, and downlink data input from the higher layer processing unit 101 using a predetermined coding scheme, such as block codes, convolutional codes, or turbo codes, or alternatively, encodes using a coding scheme decided by the radio resource control unit 1011. The modulating unit 1032 modulates the coded bits input from the encoding unit 1031 according to a predetermined modulation scheme or a modulation scheme decided by the radio resource control unit 1011, such as binary phase shift keying (BPSK), quadrature phase shift keying (QPSK), 16 quadrature amplitude modulation (16-QAM), 64-QAM, or 256-QAM.

The downlink reference signal generating unit 1033 generates, as a downlink reference signal, a sequence known to the terminal device 2 and computed according to predetermined rules on the basis of information such as a physical cell identity (PCI, cell ID) for identifying the base station device 1A.

The multiplexing unit 1034 multiplexes the modulated modulation symbols of each channel and the generated downlink reference signal and downlink control information. In other words, the multiplexing unit 1034 maps the modulated modulation symbols of each channel and the generated downlink reference signal and downlink control information to resource elements.

The radio transmitting unit 1035 applies the inverse fast Fourier transform (IFFT) to the multiplexed modulation symbols and the like to generate OFDM symbols, adds a cyclic prefix (CP) to the OFDM symbols to generate a baseband digital signal, converts the baseband digital signal to an analog signal, removes excess frequency components by filtering, upconverts the signal to a carrier frequency, amplifies the signal power, and outputs to the transmit/receive antenna 105 for transmission.

The receiving unit 104, following a control signal input from the control unit 102, demultiplexes, demodulates, and decodes a received signal received from the terminal device 2 via the transmit/receive antenna 105, and outputs the decoded information to the higher layer processing unit 101.

The radio receiving unit 1041 converts an uplink signal received via the transmit/receive antenna 105 to a baseband signal by downconversion, removes unwanted frequency components, controls the amplification level so that the signal level is suitably maintained, conducts quadrature demodulation on the basis of the in-phase components and the quadrature components of the received signal, and converts the quadrature-demodulated analog signal into a digital signal.

The radio receiving unit 1041 removes portions corresponding to the CP from the converted digital signal. The radio receiving unit 1041 applies the fast Fourier transform (FFT) to the signal with the CP removed, extracts a signal in the frequency domain, and outputs to the demultiplexing unit 1042.

The demultiplexing unit 1042 demultiplexes the signal input from the radio receiving unit 1041 into signals such as the PUCCH, the PUSCH, and the uplink reference signal. Note that this demultiplexing is conducted on the basis of radio resource allocation information included in an uplink grant decided in advance by the radio resource control unit 1011 of the base station device 1A and reported to each terminal device 2.

Also, the demultiplexing unit 1042 conducts channel compensation of the PUCCH and PUSCH. In addition, the demultiplexing unit 1042 demultiplexes the uplink reference signal.

The demodulating unit 1043 applies the inverse discrete Fourier transform (IDFT) to the PUSCH, acquires modulation symbols, and for each modulation symbol in the PUCCH and PUSCH, demodulates the received signal using a modulation scheme that is predetermined or reported in advance by the local device itself to each terminal device 2 in the uplink grant, such as BPSK, QPSK, 16-QAM, 64-QAM, or 256-QAM.

The decoding unit 1044 decodes the coded bits of the demodulated PUCCH and PUSCH according to a predetermined coding scheme at a code rate that is predetermined or reported in advance by the local device itself to the terminal device 2 in the uplink grant, and outputs the decoded uplink data and uplink control information to the higher layer processing unit 101. In the case in which the PUSCH is retransmitted, the decoding unit 1044 conducts decoding using coded bits and demodulated coded bits being held in a HARQ buffer input from the higher layer processing unit 101.

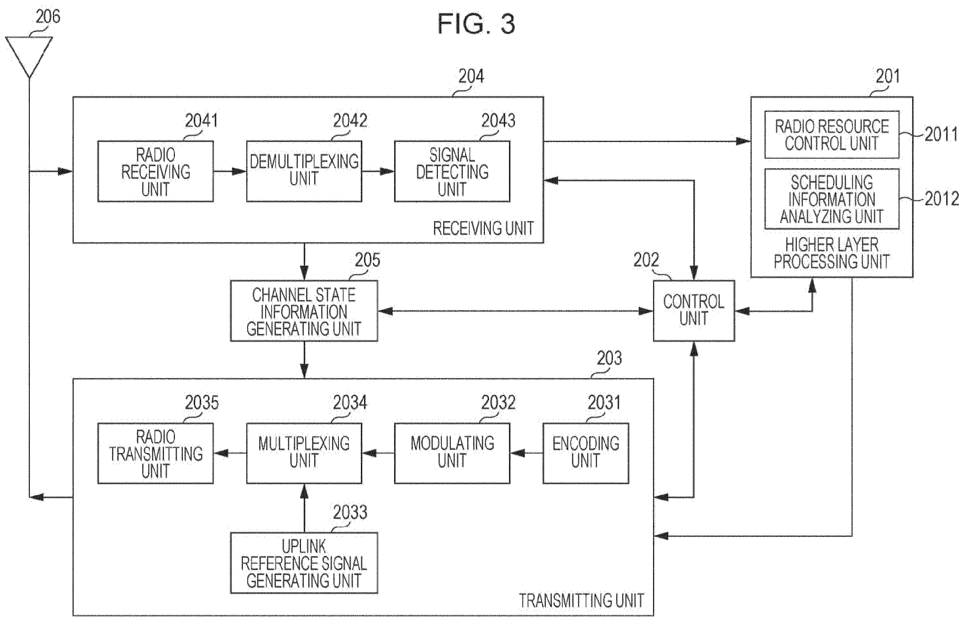

FIG. 3 is a schematic block diagram illustrating a configuration of the terminal device 2 according to the present embodiment. As illustrated in FIG. 3, the terminal device 2 is configured to include a higher layer processing unit 201, a control unit 202, a transmitting unit 203, a receiving unit 204, a channel state information generating unit 205, and a transmit/receive antenna 206. In addition, the higher layer processing unit 201 is configured to include a radio resource control unit 2011 and a scheduling information analyzing unit 2012. Also, the transmitting unit 203 is configured to include an encoding unit 2031, a modulating unit 2032, an uplink reference signal generating unit 2033, a multiplexing unit 2034, and a radio transmitting unit 2035. Also, the receiving unit 204 is configured to include a radio receiving unit 2041, a demultiplexing unit 2042, and a signal detecting unit 2043.

The higher layer processing unit 201 outputs uplink data (transport blocks) generated by user operations or the like to the transmitting unit 203. Also, the higher layer processing unit 201 conducts processing in the medium access control (MAC) layer, the packet data convergence protocol (PDCP) layer, the radio link control (RLC) layer, and the radio resource control (RRC) layer.

The higher layer processing unit 201 outputs information indicating functions of the terminal device that the local terminal device itself supports to the transmitting unit 203.

The radio resource control unit 2011 manages various configuration information of the local terminal device itself. In addition, the radio resource control unit 2011 generates information to be mapped in respective uplink channels, and outputs the information to the transmitting unit 203.

The radio resource control unit 2011 acquires configuration information related to CSI feedback transmitted from the base station device, and outputs to the control unit 202.

The scheduling information analyzing unit 2012 analyzes downlink control information received via the receiving unit 204, and determines scheduling information. Also, the scheduling information analyzing unit 2012 generates control information for controlling the receiving unit 204 and the transmitting unit 203 on the basis of the scheduling information, and outputs to the control unit 202.

On the basis of information input from the higher layer processing unit 201, the control unit 202 generates control signals for controlling the receiving unit 204, the channel state information generating unit 205, and the transmitting unit 203. The control unit 202 outputs the generated control signals to the receiving unit 204, the channel state information generating unit 205, and the transmitting unit 203, and controls the receiving unit 204 and the transmitting unit 203.

The control unit 202 controls the transmitting unit 203 to transmit CSI generated by the channel state information generating unit 205 to the base station device.

The receiving unit 204, following a control signal input from the control unit 202, demultiplexes, demodulates, and decodes a received signal received from the base station device 1A via the transmit/receive antenna 206, and outputs the decoded information to the higher layer processing unit 201. The receiving unit 204 receives a reference signal corresponding to the base station device 1A (also called the first reference signal) and a reference signal based on interference information configured from the base station device 1A (also called the second reference signal) included in the received signal, and outputs to the channel state information generating unit 205.

The radio receiving unit 2041 converts a downlink signal received via the transmit/receive antenna 206 to a baseband signal by downconversion, removes unwanted frequency components, controls the amplification level so that the signal level is suitably maintained, conducts quadrature demodulation on the basis of the in-phase components and the quadrature components of the received signal, and converts the quadrature-demodulated analog signal into a digital signal.

Also, the radio receiving unit 2041 removes a portion corresponding to the CP from the converted digital signal, applies the fast Fourier transform to the signal with the CP removed, and extracts a signal in the frequency domain.

The demultiplexing unit 2042 demultiplexes the extracted signal into the PHICH, PDCCH, EPDCCH, PDSCH, and downlink reference signal. Also, on the basis of channel estimation values for a desired signal obtained from channel measurement, the demultiplexing unit 2042 conducts channel compensation on the PHICH, PDCCH, and EPDCCH, detects downlink control information, and outputs to the control unit 202. In addition, the control unit 202 outputs channel estimation values for the PDSCH and the desired signal to the signal detecting unit 2043.

The signal detecting unit 2043 uses the PDSCH and channel estimation values to perform signal detection, and outputs to the higher layer processing unit 201. In a higher layer, if NAICS is configured, the cancellation or suppression of an interference signal is conducted to perform signal detection. For the cancellation or suppression of the interference signal, linear detection, which accounts for the channel estimation values for the interference signal, or interference cancellation or maximum likelihood detection, which account for the channel estimation values and the modulation scheme of the interference signal, may be conducted, for example.

If NAICS assistance information is configured in a higher layer, the signal detecting unit 2043 detects parameters required to estimate the interference channel and/or demodulate the interference signal. For parameters for which multiple values are configured in the NAICS assistance information, the multiple values are treated as candidates, and the value configured in the interference signal is found by blind detection. Meanwhile, for parameters not configured in the NAICS assistance information, possible values that may be configured by the system are treated as candidates, and the value configured in the interference signal may be found by blind detection. The signal detecting unit 2043 cancels or suppresses PDSCH/CRS interference using the detected parameters.

If only the physical cell ID, the number of CRS antenna ports, and the MBSFN subframe configuration are configured in the NAICS assistance information, the signal detecting unit 2043 conducts the cancellation or suppression of the interference signal without anticipating PDSCH interference. Alternatively, the terminal device conducts the handling, cancellation, or suppression of CRS interference only.

The transmitting unit 203, following a control signal input from the control unit 202, generates an uplink reference signal, encodes and modulates uplink data (transport blocks) input from the higher layer processing unit 201, multiplexes the PUCCH, PUSCH, and generated uplink reference signal, and transmits the multiplexed signal to the base station device 1A via the transmit/receive antenna 206.

The encoding unit 2031 encodes uplink control information input from the higher layer processing unit 201 using convolutional codes, block codes, or the like. In addition, the encoding unit 2031 conducts encoding using turbo codes on the basis of information used for scheduling of the PUSCH.

The modulating unit 2032 modulates the coded bits input from the encoding unit 2031 according to a modulation scheme reported in the downlink control information or a modulation scheme predetermined for each channel, such as BPSK, QPSK, 16-QAM, or 64-QAM.

The uplink reference signal generating unit 2033 generates a sequence computed according to predetermined rules (a formula), on the basis of information such as the physical cell identity (PCI; also referred to as the cell ID) for identifying the base station device 1A, the bandwidth to which the uplink reference signal is mapped, the cyclic shift reported in the uplink grant, and the values of parameters for generating a DMRS sequence.

The multiplexing unit 2034, following a control signal input from the control unit 202, reorders the PUSCH modulation symbols in parallel and then applies the discrete Fourier transform (DFT). In addition, the multiplexing unit 2034 multiplexes the PUCCH and PUSCH signals and the generated uplink reference signal for each transmit antenna port. In other words, the multiplexing unit 2034 maps the PUCCH and PUSCH signals and the generated uplink reference signal to resource elements for each transmit antenna port.

The radio transmitting unit 2035 applies the inverse fast Fourier transform (IFFT) to the multiplexed signal, conducts modulation according to the SC-FDMA scheme, generates SC-FDMA symbols, adds a CP to the generated SC-FDMA symbols, generates a baseband digital signal, converts the baseband digital signal to an analog signal, removes excess frequency components, converts the signal to a carrier frequency by upconversion, amplifies the signal power, and outputs the signal to the transmit/receive antenna 206 for transmission.

The base station device of the present invention is a base station device that communicates with a terminal device, is provided with a higher layer that configures, in the terminal device, first assistance information used by the terminal device to reduce interference from at least a downlink shared channel, and configures the first assistance information in at least one cell from among a primary cell and secondary cells.

Also, the base station device of the present invention configures the first assistance information in one cell from among the primary cell and secondary cells.

Also, the base station device of the present invention configures the first assistance information in the primary cell and one secondary cell, up to a maximum of two cells.

In addition, in the base station device of the present invention, the higher layer additionally configures second assistance information used by the terminal device to reduce interference from a cell-specific reference signal, and configures either one of the first assistance information and the second assistance information in the primary cell.

In addition, in the base station device of the present invention, the second assistance information configured in the primary cell and the second assistance information configured in the secondary cell have different configurable information.

In addition, a terminal device of the present invention is a terminal device that communicates with a base station device, is a terminal device in which first assistance information used by the terminal device to reduce interference from at least a downlink shared channel is configured from the base station device, and on the basis of the first assistance information, cancels or suppresses interference of at least the downlink shared channel with respect to at least one cell from among the primary cell and secondary cells.

In addition, the terminal device of the present invention cancels or suppresses the interference on the basis of the first assistance information with respect to one cell from among the primary cell and secondary cells.

In addition, the terminal device of the present invention cancels or suppresses the interference on the basis of the first assistance information with respect to a maximum of two cells from among the primary cell and secondary cells.

In addition, in the terminal device of the present invention, second assistance information used by the terminal device to reduce interference from a cell-specific reference signal additionally is configured from the base station device, and the terminal device of the present invention cancels or suppresses the interference signal with respect to the primary cell on the basis of the first assistance information or the second assistance information, and cancels or suppresses the interference signal with respect to the secondary cell on the basis of the first assistance information.

In addition, a communication method of the present invention is a communication method for a base station device that communicates with a terminal device, and includes a step of configuring, in the terminal device, first assistance information used by the terminal device to reduce interference from at least a downlink shared channel, and a step of configuring the first assistance information in at least one cell from among a primary cell and secondary cells.

In addition, a communication method of the present invention is a communication method for a terminal device that communicates with a base station device, and includes a receiving step of receiving, from the base station device, first assistance information used by the terminal device to reduce interference from at least a downlink shared channel, and a step of cancelling or suppressing interference of at least the downlink shared channel with respect to at least one cell from among the primary cell and a secondary cell, on the basis of the first assistance information.

Note that a program operating on the base station device and the terminal device according to the present invention is a program that controls a CPU or the like (a program that causes a computer to function) so as to realize the functions of the foregoing embodiments according to the present invention. Additionally, information handled by these devices is temporarily buffered in RAM during the processing thereof, and thereafter stored in various types of ROM or an HDD, read out, and modified/written by the CPU as necessary. A recording medium that stores the program may be any of a semiconductor medium (such as ROM or a non-volatile memory card, for example), an optical recording medium (such as a DVD, MO, MD, CD, or BD, for example), or a magnetic recording medium (such as magnetic tape or a flexible disk, for example). Also, rather than the functions of the foregoing embodiments being realized by executing a loaded program, in some cases the functions of the present invention may be realized by joint processing with an operating system, another application program, or the like.

Also, in the case of distribution into the market, the program may be distributed such as by being stored on a portable recording medium, or by being transferred to a server computer connected via a network such as the Internet. In this case, a storage device of the server computer is also included in the present invention. In addition, all or part of the terminal device and the base station device in the foregoing embodiments may also be realized as an LSI chip, which is typically an integrated circuit. The respective function blocks of the receiving device may be realized as individual chips, or all or part thereof may be integrated as a single chip. When respective function blocks are integrated into an integrated circuit, an integrated circuit controller that controls the respective function blocks is additionally provided.

Furthermore, the circuit integration methodology is not limited to embedded applications and may be also be realized with special-purpose circuits, or with general-purpose processors. In addition, if progress in semiconductor technology yields integrated circuit technology that may substitute for LSI, the use of an integrated circuit according to that technology is also possible.

Note that the present invention is not limited to the foregoing embodiments. A terminal device of the present invention is not limited to application to a mobile station device, and obviously may also be applied to stationary or non-mobile electronic equipment installed indoors or outdoors, such as AV equipment, kitchen appliances, cleaning and laundry equipment, air conditioning equipment, office equipment, vending machines, and other consumer equipment, for example.

The foregoing thus describes embodiments of the present invention in detail and with reference to the drawings.

### Industrial Applicability

The present invention is favorably used in a base station device, a terminal device, and a method.

### Reference Signs List

- 1A, 1B: base station device
- 2A, 2B, 2C: terminal device
- 101: higher layer processing unit
- 102: control unit
- 103: transmitting unit
- 104: receiving unit
- 105: transmit/receive antenna
- 1011: radio resource control unit
- 1012: scheduling unit
- 1031: encoding unit
- 1032: modulating unit
- 1033: downlink reference signal generation unit
- 1034: multiplexing unit
- 1035: radio transmitting unit
- 1041: radio receiving unit
- 1042: demultiplexing unit
- 1043: demodulating unit
- 1044: decoding unit
- 201: higher layer processing unit
- 202: control unit
- 203: transmitting unit
- 204: receiving unit
- 205: channel state information generating unit
- 206: transmit/receive antenna
- 2011: radio resource control unit
- 2012: scheduling information analyzing unit
- 2031: encoding unit
- 2032: modulating unit
- 2033: uplink reference signal generating unit
- 2034: multiplexing unit
- 2035: radio transmitting unit
- 2041: radio receiving unit
- 2042: demultiplexing unit
- 2043: signal detecting unit

## Claims

1. A base station apparatus (1A), comprising:
a higher layer processing unit (101) configured to set NAICS assistance information, wherein the base station apparatus (1A) is adapted to configure NAICS assistance information with respect to a primary cell and a secondary cell, and
a transmission unit (103) configured to transmit a NAICS assistance information list to a terminal apparatus, said NAICS assistance information list including a plurality of NAICS assistance information, wherein
the NAICS assistance information includes at least one of information related to a physical cell ID, information related to a number of CRS antenna ports, information related to a transmission mode, information related to a first power ratio, information related to a second power ratio, and information related to an MBSFN subframe configuration;
the first power ratio is a power ratio of the PDSCH in OFDM symbols where the CRS is not mapped, and the CRS,
the second power ratio is a power ratio of the PDSCH in OFDM symbols where the CRS is mapped, and the PDSCH in OFDM symbols where the CRS is not mapped,
one of the plurality of NAICS assistance information is information about the base station apparatus, and the other of the plurality of NAICS assistance information is information about another base station apparatus,
the plurality of NAICS assistance information is information that assists the terminal apparatus to cancel or suppress interference to the primary or secondary cell that the terminal apparatus receives from another base station apparatus; and
the primary cell and the secondary cell are used for carrier aggregation in the base station apparatus.

2. The base station apparatus (1A) according to claim 1, further comprising:
a reception unit (104) configured to:
receive, from the terminal apparatus, information indicating that the terminal apparatus supports NAICS.

3. The base station apparatus (1A) according to claim 2, further comprising:
the higher layer processing unit (101) configured to:
if the reception unit (104) receives, from the terminal apparatus, information indicating that the terminal apparatus supports NAICS, determine whether or not to configure NAICS with respect to the terminal apparatus, wherein
if the higher layer processing unit (101) determines to configure NAICS with respect to the terminal apparatus, the transmission unit (103) transmits the NAICS assistance information to the terminal apparatus.

4. The base station apparatus (1A) according to claim 2, wherein
from among the information related to a physical cell ID, the information related to a number of cell-specific reference signal, CRS, antenna ports, the information related to a transmission mode, information related to the first power ratio, information related to the second power ratio, and information related to the MBSFN subframe configuration,
at least one piece of information set with respect to the secondary cell is different from the information set with respect to the primary cell.

5. A method performed by a base station apparatus (1A), comprising:
a step of setting NAICS assistance information, wherein the base station apparatus (1A) configures NAICS assistance information with respect to a primary cell and a secondary cell, and
a step of transmitting a NAICS assistance information list to a terminal apparatus, said NAICS assistance information list including a plurality of NAICS assistance information, wherein
the NAICS assistance information includes at least one of information related to a physical cell ID, information related to a number of CRS antenna ports, information related to a transmission mode, information related to a first power ratio, information related to a second power ratio, and information related to an MBSFN subframe configuration;
the first power ratio is a power ratio of the PDSCH in OFDM symbols where the CRS is not mapped, and the CRS,
the second power ratio is a power ratio of the PDSCH in OFDM symbols where the CRS is mapped, and the PDSCH in OFDM symbols where the CRS is not mapped,
one of the plurality of NAICS assistance information is information about the base station apparatus, and the other of the plurality of NAICS assistance information is information about another base station apparatus,
the plurality of NAICS assistance information is information that assists the terminal apparatus to cancel or suppress interference to the primary or secondary cell that the terminal apparatus receives from another base station apparatus; and
the primary cell and the secondary cell are used for carrier aggregation in the base station apparatus.

6. A terminal apparatus (2A), comprising:
a reception unit (204) configured to receive a NAICS assistance information list from a base station apparatus, said NAICS assistance information list including a plurality of NAICS assistance information set for at least one of a primary cell or a secondary cell by the base station apparatus, wherein
the NAICS assistance information includes at least one of information related to a physical cell ID, information related to a number of CRS antenna ports, information related to a transmission mode, information related to a first power ratio, information related to a second power ratio, and information related to an MBSFN subframe configuration;
the first power ratio is a power ratio of the PDSCH in OFDM symbols where the CRS is not mapped, and the CRS,
the second power ratio is a power ratio of the PDSCH in OFDM symbols where the CRS is mapped, and the PDSCH in OFDM symbols where the CRS is not mapped,
one of the plurality of NAICS assistance information is information about the base station apparatus, and the other of the plurality of NAICS assistance information is information about another base station apparatus,
the plurality of NAICS assistance information is information that assists the terminal apparatus to cancel or suppress interference to the primary or secondary cell that the terminal apparatus receives from another base station apparatus; and
the primary cell and the secondary cell are used for carrier aggregation in the base station apparatus.

7. The terminal apparatus (2A) according to claim 6, further comprising:
a transmission unit (203) configured to:
transmit, to the base station apparatus, information indicating that the terminal apparatus supports NAICS.

8. The terminal apparatus (2A) according to claim 6, wherein
from among the information related to a physical cell ID, the information related to a number of CRS antenna ports, the information related to a transmission mode, information related to a first power ratio, information related to a second power ratio, and information related to an MBSFN subframe configuration,
at least one piece of information set with respect to the secondary cell is different from the information set with respect to the primary cell.

9. A method performed by a terminal apparatus (2A), comprising:
a step of receiving a NAICS assistance information list from a base station apparatus, said NAICS assistance information list including a plurality of NAICS assistance information set for at least one of a primary cell or a secondary cell by the base station apparatus, wherein
the NAICS assistance information includes at least one of information related to a physical cell ID, information related to a number of CRS antenna ports, information related to a transmission mode, information related to a first power ratio, information related to a second power ratio, and information related to an MBSFN subframe configuration;
the first power ratio is a power ratio of the PDSCH in OFDM symbols where the CRS is not mapped, and the CRS,
the second power ratio is a power ratio of the PDSCH in OFDM symbols where the CRS is mapped, and the PDSCH in OFDM symbols where the CRS is not mapped,
one of the plurality of NAICS assistance information is information about the base station apparatus, and the other of the plurality of NAICS information is information about another base station apparatus,
the plurality of NAICS assistance information is information that assists the terminal apparatus to cancel or suppress interference to the primary or secondary cell that the terminal apparatus receives from another base station apparatus; and
the primary cell and the secondary cell are used for carrier aggregation in the base station apparatus.

## Patentansprüche

1. Basisstationsvorrichtung (1A), aufweisend:
eine Verarbeitungseinheit (101) einer höheren Schicht, die dafür konfiguriert ist, NAICS-Hilfsinformationen einzurichten, wobei die Basisstationsvorrichtung (1A) dafür geeignet ist, NAICS-Hilfsinformationen in Bezug auf eine Primärzelle und eine Sekundärzelle zu konfigurieren, und
eine Übertragungseinheit (103), die dafür konfiguriert ist, eine NAICS-Hilfsinformationsliste zu einer Endgerätevorrichtung zu übertragen, wobei die NAICS-Hilfsinformationsliste eine Vielzahl von NAICS-Hilfsinformationen enthält, wobei
die NAICS-Hilfsinformationen eine Information in Bezug auf eine ID einer physikalischen Zelle, eine Information in Bezug auf eine Anzahl von CRS-Antennenports, eine Information in Bezug auf einen Übertragungsmodus, eine Information in Bezug auf ein erstes Leistungsverhältnis, eine Information in Bezug auf ein zweites Leistungsverhältnis und/oder eine Information in Bezug auf eine MBSFN-Subframe-Konfiguration umfassen;
das erste Leistungsverhältnis ein Leistungsverhältnis des PDSCH in OFDM-Symbolen, wobei das CRS nicht abgebildet wird, und des CRS ist,
das zweite Leistungsverhältnis ein Leistungsverhältnis des PDSCH in OFDM-Symbolen, wobei das CRS abgebildet wird, und des PDSCH in OFDM-Symbolen ist, wo das CRS nicht abgebildet wird,
eine der Vielzahl von NAICS-Hilfsinformationen eine Information über die Basisstationsvorrichtung ist und die andere der Vielzahl von NAICS-Hilfsinformationen eine Information über eine andere Basisstationsvorrichtung ist,
die Vielzahl von NAICS-Hilfsinformationen Informationen sind, die der Endgerätevorrichtung helfen, eine Interferenz der Primärzelle oder Sekundärzelle, die die Endgerätevorrichtung von einer anderen Basisstationsvorrichtung empfängt, aufzuheben oder zu unterdrücken; und
die Primärzelle und die Sekundärzelle zur Träger-Aggregation in der Basisstationsvorrichtung genutzt werden.

2. Basisstationsvorrichtung (1A) nach Anspruch 1, ferner aufweisend:
eine Empfangseinheit (104), die dafür konfiguriert ist:
von der Endgerätevorrichtung Informationen zu empfangen, die angeben, dass die Endgerätevorrichtung NAICS unterstützt.

3. Basisstationsvorrichtung (1A) nach Anspruch 2, ferner aufweisend:
die Verarbeitungseinheit (101) einer höheren Schicht, die dafür konfiguriert ist:
falls die Empfangseinheit (104) von der Endgerätevorrichtung Informationen empfängt, die angeben, dass die Endgerätevorrichtung NAICS unterstützt, zu bestimmen, ob NAICS in Bezug auf die Endgerätevorrichtung zu konfigurieren ist oder nicht, wobei,
falls die Verarbeitungseinheit (101) einer höheren Schicht bestimmt, NAICS in Bezug auf die Endgerätevorrichtung zu konfigurieren, die Übertragungseinheit (103) die NAICS-Hilfsinformationen zur Endgerätevorrichtung überträgt.

4. Basisstationsvorrichtung (1A) nach Anspruch 2, wobei
aus der Information in Bezug auf eine ID einer physikalischen Zelle, der Information in Bezug auf eine Anzahl von Antennenports für zellenspezifische Referenzsignale, CRS, der Information in Bezug auf einen Übertragungsmodus, der Information in Bezug auf das erste Leistungsverhältnis, der Information in Bezug auf das zweite Leistungsverhältnis und der Information in Bezug auf die MBSFN-Subframe-Konfiguration
zumindest ein Stück einer in Bezug auf die Sekundärzelle eingerichteten Information von der in Bezug auf die Primärzelle eingerichteten Information verschieden ist.

5. Verfahren, das von einer Basisstationsvorrichtung (1A) durchgeführt wird, aufweisend:
einen Schritt zum Einrichten von NAICS-Hilfsinformationen, wobei die Basisstationsvorrichtung (1A) NAICS-Hilfsinformationen in Bezug auf eine Primärzelle und eine Sekundärzelle konfiguriert, und
einen Schritt zum Übertragen einer NAICS-Hilfsinformationsliste zu einer Endgerätevorrichtung, wobei die NAICS-Hilfsinformationsliste eine Vielzahl von NAICS-Hilfsinformationen enthält, wobei
die NAICS-Hilfsinformationen eine Information in Bezug auf eine ID einer physikalischen Zelle, eine Information in Bezug auf eine Anzahl von CRS-Antennenports, eine Information in Bezug auf einen Übertragungsmodus, eine Information in Bezug auf ein erstes Leistungsverhältnis, eine Information in Bezug auf ein zweites Leistungsverhältnis und/oder eine Information in Bezug auf eine MBSFN-Subframe-Konfiguration umfassen;
das erste Leistungsverhältnis ein Leistungsverhältnis des PDSCH in OFDM-Symbolen, wobei das CRS nicht abgebildet wird, und des CRS ist,
das zweite Leistungsverhältnis ein Leistungsverhältnis des PDSCH in OFDM-Symbolen, wobei das CRS abgebildet wird, und des PDSCH in OFDM-Symbolen ist, wobei das CRS nicht abgebildet wird,
eine der Vielzahl von NAICS-Hilfsinformationen eine Information über die Basisstationsvorrichtung ist und die andere der Vielzahl von NAICS-Hilfsinformationen eine Information über eine andere Basisstationsvorrichtung ist,
die Vielzahl von NAICS-Hilfsinformationen Informationen sind, die der Endgerätevorrichtung helfen, eine Interferenz der Primärzelle oder Sekundärzelle, die die Endgerätevorrichtung von einer anderen Basisstationsvorrichtung empfängt, aufzuheben oder zu unterdrücken; und
die Primärzelle und die Sekundärzelle zur Träger-Aggregation in der Basisstationsvorrichtung genutzt werden.

6. Endgerätevorrichtung (2A), aufweisend:
eine Empfangseinheit (204), die dafür konfiguriert ist, eine NAICS-Hilfsinformationsliste von einer Basisstationsvorrichtung zu empfangen, wobei die NAICS-Hilfsinformationsliste eine Vielzahl von NAICS-Hilfsinformationen enthält, die von der Basisstationsvorrichtung für zumindest eine einer Primärzelle oder einer Sekundärzelle eingerichtet wurden, wobei
die NAICS-Hilfsinformationen eine Information in Bezug auf eine ID einer physikalischen Zelle, eine Information in Bezug auf eine Anzahl von CRS-Antennenports, eine Information in Bezug auf einen Übertragungsmodus, eine Information in Bezug auf ein erstes Leistungsverhältnis, eine Information in Bezug auf ein zweites Leistungsverhältnis und/oder eine Information in Bezug auf eine MBSFN-Subframe-Konfiguration umfassen;
das erste Leistungsverhältnis ein Leistungsverhältnis des PDSCH in OFDM-Symbolen, wobei das CRS nicht abgebildet wird, und des CRS ist,
das zweite Leistungsverhältnis ein Leistungsverhältnis des PDSCH in OFDM-Symbolen, wobei das CRS abgebildet wird, und des PDSCH in OFDM-Symbolen ist, wobei das CRS nicht abgebildet wird,
eine der Vielzahl von NAICS-Hilfsinformationen eine Information über die Basisstationsvorrichtung ist und die andere der Vielzahl von NAICS-Hilfsinformationen eine Information über eine andere Basisstationsvorrichtung ist,
die Vielzahl von NAICS-Hilfsinformationen Informationen sind, die der Endgerätevorrichtung helfen, eine Interferenz der Primärzelle oder Sekundärzelle, die die Endgerätevorrichtung von einer anderen Basisstationsvorrichtung empfängt, aufzuheben oder zu unterdrücken; und
die Primärzelle und die Sekundärzelle zur Träger-Aggregation in der Basisstationsvorrichtung genutzt werden.

7. Endgerätevorrichtung (2A) nach Anspruch 6, ferner aufweisend:
eine Übertragungseinheit (203), die dafür konfiguriert ist:
zur Basisstationsvorrichtung Informationen zu übertragen, die angeben, dass die Endgerätevorrichtung NAICS unterstützt.

8. Endgerätevorrichtung (2A) nach Anspruch 6, wobei
aus der Information in Bezug auf eine ID einer physikalischen Zelle, der Information in Bezug auf eine Anzahl von CRS-Antennenports, der Information in Bezug auf einen Übertragungsmodus, der Information in Bezug auf ein erstes Leistungsverhältnis, der Information in Bezug auf ein zweites Leistungsverhältnis und der Information in Bezug auf eine MBSFN-Subframe-Konfiguration
zumindest ein Stück einer in Bezug auf die Sekundärzelle eingerichteten Information von der in Bezug auf die Primärzelle eingerichteten Information verschieden ist.

9. Verfahren, das von einer Endgerätevorrichtung (2A) durchgeführt wird, aufweisend:
einen Schritt zum Empfangen einer NAICS-Hilfsinformationsliste von einer Basisstationsvorrichtung, wobei die NAICS-Hilfsinformationsliste eine Vielzahl von NAICS-Hilfsinformationen enthält, die von der Basisstationsvorrichtung für zumindest eine einer Primärzelle oder einer Sekundärzelle eingerichtet wurden, wobei
die NAICS-Hilfsinformationen eine Information in Bezug auf eine ID einer physikalischen Zelle, eine Information in Bezug auf eine Anzahl von CRS-Antennenports, eine Information in Bezug auf einen Übertragungsmodus, eine Information in Bezug auf ein erstes Leistungsverhältnis, eine Information in Bezug auf ein zweites Leistungsverhältnis und/oder eine Information in Bezug auf eine MBSFN-Subframe-Konfiguration umfassen;
das erste Leistungsverhältnis ein Leistungsverhältnis des PDSCH in OFDM-Symbolen, wobei das CRS nicht abgebildet wird, und des CRS ist,
das zweite Leistungsverhältnis ein Leistungsverhältnis des PDSCH in OFDM-Symbolen, wobei das CRS abgebildet wird, und des PDSCH in OFDM-Symbolen ist, wobei das CRS nicht abgebildet wird,
eine der Vielzahl von NAICS-Hilfsinformationen eine Information über die Basisstationsvorrichtung ist und die andere der Vielzahl von NAICS-Hilfsinformationen eine Information über eine andere Basisstationsvorrichtung ist,
die Vielzahl von NAICS-Hilfsinformationen Informationen sind, die der Endgerätevorrichtung helfen, eine Interferenz der Primärzelle oder Sekundärzelle, die die Endgerätevorrichtung von einer anderen Basisstationsvorrichtung empfängt, aufzuheben oder zu unterdrücken; und
die Primärzelle und die Sekundärzelle zur Träger-Aggregation in der Basisstationsvorrichtung genutzt werden.

## Revendications

1. Appareil de station de base (1A), comprenant :
une unité de traitement de couche supérieure (101) configurée pour définir une information d'assistance de NAICS, dans lequel l'appareil de station de base (1A) est adapté pour configurer une information d'assistance de NAICS par rapport à une cellule primaire et une cellule secondaire, et
une unité d'émission (103) configurée pour émettre une liste d'informations d'assistance de NAICS à destination d'un appareil terminal, ladite liste d'informations d'assistance de NAICS comportant
une pluralité d'informations d'assistance de NAICS, dans lequel
l'information d'assistance de NAICS comporte au moins l'une parmi une information relative à un ID de cellule physique, une information relative à un nombre de ports d'antenne de CRS, une information relative à un mode d'émission, une information relative à un premier rapport de puissance, une information relative à un second rapport de puissance, et une information relative à une configuration de sous-trame de MBSFN ;
le premier rapport de puissance est un rapport de puissance du PDSCH dans des symboles d'OFDM où le CRS n'est pas mappé, et du CRS,
le second rapport de puissance est un rapport de puissance du PDSCH dans des symboles d'OFDM où le CRS est mappé, et du PDSCH dans des symboles d'OFDM où le CRS n'est pas mappé,
l'une de la pluralité d'informations d'assistance de NAICS est une information concernant l'appareil de station de base, et l'autre de la pluralité d'informations d'assistance de NAICS est une information concernant un autre appareil de station de base,
la pluralité d'informations d'assistance de NAICS est une information qui aide l'appareil terminal à annuler ou à supprimer une interférence sur la cellule primaire ou secondaire que l'appareil terminal reçoit en provenance d'un autre appareil de station de base ; et
la cellule primaire et la cellule secondaire sont utilisées pour une agrégation de porteuses dans l'appareil de station de base.

2. Appareil de station de base (1A) selon la revendication 1, comprenant en outre :
une unité de réception (104) configurée pour :
recevoir, en provenance de l'appareil terminal, une information indiquant que l'appareil terminal prend en charge un NAICS.

3. Appareil de station de base (1A) selon la revendication 2, comprenant en outre :
l'unité de traitement de couche supérieure (101) configurée pour :
si l'unité de réception (104) reçoit, en provenance de l'appareil terminal, une information indiquant que l'appareil terminal prend en charge un NAICS, déterminer s'il faut configurer ou non un NAICS par rapport à l'appareil terminal, dans lequel
si l'unité de traitement de couche supérieure (101) détermine qu'il faut configurer un NAICS par rapport à l'appareil terminal, l'unité d'émission (103) émet les informations d'assistance de NAICS à destination de l'appareil terminal.

4. Appareil de station de base (1A) selon la revendication 2, dans lequel
parmi l'information relative à un ID de cellule physique, l'information relative à un nombre de ports d'antenne de signal de référence spécifique à une cellule, CRS, l'information relative à un mode d'émission, l'information relative au premier rapport de puissance, l'information relative au second rapport de puissance, et l'information relative à la configuration de sous-trame de MBSFN,
au moins un fragment d'une information définie par rapport à la cellule secondaire est différent de l'information définie par rapport à la cellule primaire.

5. Procédé réalisé par
un appareil de station de base (1A), comprenant :
une étape de définition d'information d'assistance de NAICS, dans lequel l'appareil de station de base (1A) configure une information d'assistance de NAICS par rapport à une cellule primaire et une cellule secondaire, et
une étape d'émission d'une liste d'informations d'assistance de NAICS à destination d'un appareil terminal, ladite liste d'informations d'assistance de NAICS comportant une pluralité d'informations d'assistance de NAICS, dans lequel
l'information d'assistance de NAICS comporte au moins l'une parmi une information relative à un ID de cellule physique, une information relative à un nombre de ports d'antenne de CRS, une information relative à un mode d'émission, une information relative à un premier rapport de puissance, une information relative à un second rapport de puissance, et une information relative à une configuration de sous-trame de MBSFN ;
le premier rapport de puissance est un rapport de puissance du PDSCH dans des symboles d'OFDM où le CRS n'est pas mappé, et du CRS,
le second rapport de puissance est un rapport de puissance du PDSCH dans des symboles d'OFDM où le CRS est mappé, et du PDSCH dans des symboles d'OFDM où le CRS n'est pas mappé,
l'une de la pluralité d'informations d'assistance de NAICS concerne l'appareil de station de base, et l'autre de la pluralité d'informations d'assistance de NAICS est une information concernant un autre appareil de station de base,
la pluralité d'informations d'assistance de NAICS est une information qui aide
l'appareil terminal à annuler ou à supprimer une interférence sur la cellule primaire ou secondaire que l'appareil terminal reçoit en provenance d'un autre appareil de station de base ; et
la cellule primaire et la cellule secondaire sont utilisées pour une agrégation de porteuses dans l'appareil de station de base.

6. Appareil terminal (2A), comprenant :
une unité de réception (204) configurée pour recevoir une liste d'informations d'assistance de NAICS en provenance d'un appareil de station de base, ladite liste d'informations d'assistance de NAICS comportant
une pluralité d'informations d'assistance de NAICS définies pour au moins l'une parmi une cellule primaire ou une cellule secondaire par l'appareil de station de base,
dans lequel
l'information d'assistance de NAICS comporte au moins l'une parmi une information relative à un ID de cellule physique, une information relative à un nombre de ports d'antenne de CRS, une information relative à un mode d'émission, une information relative à un premier rapport de puissance, une information relative à un second rapport de puissance, et une information relative à une configuration de sous-trame de MBSFN ;
le premier rapport de puissance est un rapport de puissance du PDSCH dans des symboles d'OFDM où le CRS n'est pas mappé, et du CRS,
le second rapport de puissance est un rapport de puissance du PDSCH dans des symboles d'OFDM où le CRS est mappé, et du PDSCH dans des symboles d'OFDM où le CRS n'est pas mappé,
l'une de la pluralité d'informations d'assistance de NAICS est une information concernant l'appareil de station de base, et l'autre de la pluralité d'informations d'assistance de NAICS est une information concernant un autre appareil de station de base,
la pluralité d'informations d'assistance de NAICS est une information qui aide
l'appareil terminal à annuler ou à supprimer une interférence sur la cellule primaire ou secondaire que l'appareil terminal reçoit en provenance d'un autre appareil de station de base ; et
la cellule primaire et la cellule secondaire sont utilisées pour une agrégation de porteuses dans l'appareil de station de base.

7. Appareil terminal (2A) selon la revendication 6, comprenant en outre :
une unité d'émission (203) configurée pour :
émettre, à destination de l'appareil de station de base, une information indiquant que l'appareil terminal prend en charge un NAICS.

8. Appareil terminal (2A) selon la revendication 6, dans lequel
parmi l'information relative à un ID de cellule physique, l'information relative à un nombre de ports d'antenne de CRS, l'information relative à un mode d'émission, l'information relative à un premier rapport de puissance, l'information relative à un second rapport de puissance, et l'information relative à une configuration de sous-trame de MBSFN,
au moins un fragment d'une information définie par rapport à la cellule secondaire est différent de l'information définie par rapport à la cellule primaire.

9. Procédé réalisé par
un appareil terminal (2A), comprenant :
une étape de réception d'une liste d'informations d'assistance de NAICS en provenance d'un appareil de station de base, ladite liste d'informations d'assistance de NAICS comportant une pluralité d'informations d'assistance de NAICS définies pour au moins l'une parmi une cellule primaire ou une cellule secondaire par l'appareil de station de base,
dans lequel
l'information d'assistance de NAICS comporte au moins l'une parmi une information relative à un ID de cellule physique, une information relative à un nombre de ports d'antenne de CRS, une information relative à un mode d'émission, une information relative à un premier rapport de puissance, une information relative à un second rapport de puissance, et une information relative à une configuration de sous-trame de MBSFN ;
le premier rapport de puissance est un rapport de puissance du PDSCH dans des symboles d'OFDM où le CRS n'est pas mappé, et du CRS,
le second rapport de puissance est un rapport de puissance du PDSCH dans des symboles d'OFDM où le CRS est mappé, et du PDSCH dans des symboles d'OFDM où le CRS n'est pas mappé,
l'une de la pluralité d'informations d'assistance de NAICS est une information concernant l'appareil de station de base, et l'autre de la pluralité d'informations de NAICS est une information concernant un autre appareil de station de base,
la pluralité d'informations d'assistance de NAICS est une information qui aide
l'appareil terminal à annuler ou à supprimer une interférence sur la cellule primaire ou secondaire que l'appareil terminal reçoit en provenance d'un autre appareil de station de base ; et
la cellule primaire et la cellule secondaire sont utilisées pour une agrégation de porteuses dans l'appareil de station de base.
